Europäisches Patentamt

European Patent Office

Office européen des brevets

(19)

(11) **EP 1 024 501 A1**

(12) **EUROPEAN PATENT APPLICATION**
published in accordance with Art. 158(3) EPC

(43) Date of publication:
02.08.2000 Bulletin 2000/31

(51) Int. Cl.$^7$: **G21C 7/34**, G21C 7/30,
G21G 1/02

(21) Application number: 98940070.0

(22) Date of filing: 13.08.1998

(86) International application number:
**PCT/EA98/00005**

(87) International publication number:
**WO 00/10173 (24.02.2000 Gazette 2000/08)**

(84) Designated Contracting States:
**DE FR GB IT SE**

(71) Applicant:
**Otkrytoe Aktsionernoe Obschestvo,
Nauchno-Issledovatelsky Institut Stali
Moscow, 127411 (RU)**

(72) Inventors:
• **IRDINCHEEV, Ljummir Ananievich
Moscow, 109144 (RU)**
• **IVANOV, Andrei Akimovich
Moscow, 123060 (RU)**

• **MALOFEEV, Alexandr Mikhailovich
Moskovskaya obl., 141730 (RU)**
• **ORLOV, Viktor Vladimirovich
Moscow, 123060 (RU)**
• **ROTOTAEV, Dmitry Alexandrovich
Moscow, 125411 (RU)**

(74) Representative: **Haley, Stephen
Gill Jennings & Every,
Broadgate House,
7 Eldon Street
London EC2M 7LH (GB)**

(54) **METHOD FOR CARRYING OUT A FISSION NUCLEAR CHAIN REACTION ON RESONANCE NEUTRONS**

(57) The present invention relates to the nuclear engineering and is designed to produce a nuclear fission chain reaction for obtaining large fluences of neutrons, gamma-ray quanta, and producing thermal and electric power.

It is an object of the invention to reduce mass and improve the usage efficiency of nuclear fuel in the nuclear reactor core.

The invention is essentially based on the fact that all of the fast neutrons can be slowed down, substantially without losses, to thermal energies at which they may be considered stationary when arriving at the vacuum magnetic trap as their velocity is low as compared to the velocity of the fissile material nuclei movement, and, therefore, all of them may react even at a relatively low density of the fissile material.

The fissile material critical mass in the reactor core is considerably reduced (up to few grams or tens of grams).

The invention ensures that great energies, (1000 megawatt and greater) can be released in the reactor core as the fission products containing more then 90 percent of the nuclear power released may be removed from the reactor core and directed to the facilities for direct conversion of their energy. e.g., into electricity.

The nuclear reactor is substantially safe from the environmental standpoint as at any given time the amount of the fissile material in the reactor core will not exceed few tens of grams.

EP 1 024 501 A1

**Description**

The present invention relates to nuclear engineering and is designed to produce a nuclear fission chain reaction.

The invention may be used to obtain great fluences of neutrons, gamma-ray quanta, and to produce thermal and electric power.

The commonly accepted conventional method for producing a nuclear fission chain reaction is a nuclear explosion or a fissile material fission by fast or thermal neutrons at nuclear reactors (see Weinberg A., Wigner W., Physical Theory of Nuclear Reactors, IL. M., 1961, [1] - the most pertinent prior art).

As the explosion-induced nuclear chain reaction is uncontrollable, we shall not further concern with it. To date, the fast and thermal-neutron nuclear reactions are widely employed both at research and power reactors.

They, however, suffer the following general problems:

- a great amount of nuclear fuel should be fed into the reactor (e.g. VVER-440, VVER-1000 and RBMK-1000 require 41, 66 and 192 tons of uranium, respectively) which amount is sufficient for the entire reactor operation period (generally three years) and is replaced thereafter;
- during the operation period, less than 5 percent of the entire nuclear fuel, by mass, will react, taking into account the appearance of other fissile nuclides, i.e. the fuel usage efficiency is rather low;
- while the reactor is in service, the reaction products stay in the core and interfere with the reactor operation;
- during the process, uranium-238 whose share exceeds 95 percent of the nuclear fuel, by mass, produces a large amount of various radioactive transuranic elements with a very large half-life period, that are extremely hazardous for the environment as their permissible concentration in the ambient air and water should be several thousand times lower than that of the fission products;
- an accident at a nuclear reactor, especially after a long time in service, may cause hazardous environmental impact.

It is an object of the present invention to reduce mass and improve the usage efficiency of fissile material in the reactor core, and also to spatially separate production and utilization of the nuclear power released.

The above object is attained by providing a method for producing a nuclear chain reaction, including the steps of introducing, for the reaction initiation period, a fast-neutron source into the reactor core comprising a moderator, a vacuum magnetic trap for retaining the fissile material plasma, and neutron-absorbing screens, slowing down the neutrons of said fast-neutron source to thermal energies and directing them to the magnetic trap. The fissile material is then converted into gas or plasma, accelerated and fed into the magnetic trap at the velocity that is determined, for example, in the case of the thermal neutrons and the tissue material moving at right angles to each other, according to the following formula:

$$V_{fm} = C \sqrt{\left(\left(E_{n0} / (E_{tn} + E_{n0})\right)^2 - \left(E_{n0} / (E_r + E_{n0})\right)^2\right)} \qquad (1)$$

wherein C is the velocity of light, m/c; $E_{n0}$ is a rest energy of a neutron, eV; $E_{tn}$ is an energy of thermal neutrons, eV; $E_r$ is an energy of a selected fission resonance, eV.

Formula (1) is inferred from the universally known relationship for the kinetic energy of a traveling particle [2]:

$$\blacksquare = m_r \, C^2 / \sqrt{1 - (V_k / C)^2} - m_0 C^2 \qquad (2)$$

whence it follows that

$$V_k = C \sqrt{1 - (E_{n0} / (E_k + E_{n0}))^2} \qquad (3)$$

wherein $m_r C^2 = E_{n0}$ is a rest energy, eV; $m_0$ is a rest mass of a particle, kg.

In the case of the thermal neutrons and the fissile material moving at right angles to each other, the approach velocity at a selected interaction resonance is;

$$V^2_{fm} = V^2_r - V^2_{tn} \qquad (4)$$

wherein $V_r$ is a velocity of neutrons at the resonance interaction with the fissile material, m/c.

The substitution of expression (3) in (4) gives formula (1). In this case the velocity, i.e. the energy of mutual approach of thermal neutrons and the fissile material moving nuclei, will agree with the selected energy of the resonance fission of the fissile material whose fission cross-section may be several times greater than at the thermal neutrons.

Furthermore; a path of thermal neutrons in the moving fissile material is determined according to the following formula:

$$L = \delta \sqrt{1 + (V_{fm} / V_{tn})^2} \tag{5}$$

wherein

$\delta$ is a thickness of the tissue material layer, m;
$V_{fm}$ is a velocity of the fissile material movement, m/c;
$V_{tn}$ is a velocity of the thermal neutrons movement, m/c.

Using the path passed by thermal neutrons when intersecting the moving fissile material, the so-called "efficient" fission cross-section of the fissile material moving with thermal neutrons can be determined as:

$$\sigma_{ef} = \sigma_r \delta \sqrt{1 + (V_{fm} / V_{tn})^2} \tag{6}$$

wherein $\sigma_r$ is a fission cross-section at resonance, barn.

Fast neutrons emitted in the fission process are directed to a moderator whereupon they are returned to a magnetic trap as thermal neutrons to provide the self-sustaining nuclear fission chain reaction at the selected resonance. The critical mass is maintained constant by continuously feeding the fissile material into and withdrawing the reaction products from the core. The amount of the thermal neutrons returned to the magnetic trap is controlled by the neutron-absorbing screens connected with the reactor control system.

Using the efficient macroscopic fission cross-section [6], values of fissile material plasma density "$n_n$" and thickness "$\delta$" can be selected so that the tissue material is not be excessively transparent to thermal neutrons, and, furthermore, a wasteful movement of its great mass does not occur. These characteristics should be selected such that the multiple of density reduction of the flux of the thermal neutrons intersecting the moving fissile material plasma satisfies the condition:

$$1.01 \leq K \leq 100 \tag{7}$$

wherein

$$K = 1/\exp(-n_n \delta \sigma_r \sqrt{1 + (V_{fm}/V_{tn})^2}) \tag{8}$$

The present invention is essentially based on the fact that all of the fast neutrons can be slowed down, generally without loss, to thermal energies at which they can be considered stationary when arrive at the vacuum magnetic trap, as their velocity is low as compared to the velocity of the fissile material nuclei, and, therefore, all of them may react even at a relatively low density of the fissile material. Therefore, the above method of producing a nuclear fission resonance chain reaction provides the following three favorable circumstances:

1. Efficient slowing down of the fast neutrons to thermal energies and movement of the tissue material nuclei in their field produce a high density of substantially monoenergetic neutrons whose energy falls on some selected fission resonance of the tissue material.
2. The use of the most favorable resonance fission cross-section of the tissue material allows the selection of the resonance fission considerably exceeding the thermal neutron fission of this material.
3. Owing to the fact that the velocity of the moving fissile material can be much higher than that of thermal neutrons, the fissile material density may be considerably reduced to obtain the macroscopic cross-section similar to that of the stationary fissile material for the same resonant neutrons.

Consequently, if in a method for producing a nuclear fission resonance chain reaction in accordance with the present invention, a fissile material is e.g. plutonium-239 ($\sigma_{tn}$=742 barn), then Table 1 shows values of fissile material movement velocity "$V_{fm}$"; multiple "$K_1$" of the increase in the length of the thermal neutron path in the moving fissile material; "efficient" fission cross-section

$"\sigma_{ef}";$

and "efficient" and resonance fission cross-section/Pu-239 thermal neutron fission cross-section ratio, for different Pu-239 resonance energy values.

Table 1

### Characteristics of moving Pu-239/thermal neutrons interaction, obtained for some resonance values

| $E_r$, eV | $\sigma_0$,* barn | $\sigma_f$,** barn | $V_{fm}$ m/c | $K_1 = 1+(V/V)$ | $\sigma_{ef} = \sigma_f K_1$ | $K_2 = \sigma_{ef}/\sigma_{ts}$ | $K_3 = \sigma_f/\sigma_{ts}$ |
|---|---|---|---|---|---|---|---|
| 0.30 | - | 3300 | 7600 | 3.6 | 1.2+4 | 16.0 | 4.4 |
| 7.82 | 2344 | 1279 | 38680 | 17.6 | 2.3+4 | 30.3 | 1.72 |
| 10.94 | 1697 | 1303 | 45750 | 20.8 | 2.7+4 | 36.5 | 1.75 |
| 14.69 | 3591 | 1760 | 53020 | 24.1 | 4.2+4 | 57.2 | 2.37 |
| 22.28 | 2809 | 1659 | 65290 | 29.7 | 4.9+4 | 66.4 | 2.23 |
| 61.10 | 2700 | 1033 | 108130 | 49.2 | 5.1+4 | 68.4 | 1.39 |
| 65.96 | 2726 | 2110 | 112350 | 51.1 | 1.1+4 | 145.2 | 2.84 |
| 75.21 | 3577 | 2419 | 119970 | 54.5 | 1.3+4 | 177.7 | 3.26 |

*$\sigma_0$ is a complete cross-section at resonance, barn;

**$\sigma_f$ is a fission cross-section at resonance, barn.

As follows from the data in Table 1, when plutonium-239 is bombarded by a method in accordance with the present invention, using resonance energy $E_r$=75.21 eV for this purpose, the "efficient" fission cross-section will increase, as compared to the thermal neutron fission, approximately by 180 times or 55 times in the ease the stationary plutonium is bombarded by monoenergetic neutrons having the energy of 75.21 eV. Consequently, the data above shows that plutonium-239 critical mass required to initiate a nuclear chain reaction can be reduced approximately by the same degree when using the present method of plutonium-239 resonance fission (i.e. using the present method for producing a nuclear fission resonance chain reaction, plutonium-239 minimum critical mass may be 2-4 g instead of 460 g of plutonium in aqueous solution used in a conventional thermal neutron fission method [3]).

For the other fissile materials, the resonance energies, at which minimum critical masses are provided, are: plutonium-241 (E = 14.78 eV), uranium-235 (E = 19,3 eV), uranium-233 (E = 22 eV), etc. In this case, the resonance values at which the most complete burnup of fissile materials will take place, i.e. those providing the minimum value of parameter "α" defined by formula:

$$\alpha = \sigma_c/\sigma_f \tag{9}$$

wherein $\sigma_c$ is a capture cross-section; $\sigma_f$ is a fission cross-section, will be: plutonium-239 (E = 15.5 eV, $\alpha$ = 0.05); plutonium-241 (E = 5.91 eV, $\alpha$ = 0.03), uranium-235 (E = 13.98 eV, $\alpha$ = 0.23), uranium-233 (E = 33.95 eV, $\alpha$ = 0.025) [4,5].

Therefore, in accordance with the present method for producing a nuclear chain reaction, a tissue material will be in the plasma form in the reactor core, and its general amount may be as little as several tens of grams, consequently, the environmental impact will be minimal even in the case of complete destruction of the reactor,.

To maintain the constant density of plutonium nuclei in the course of the nuclear chain reaction, it is essential that the fissile material plasma should be continuously fed into and the fission products containing more than 90 percent of the nuclear energy released should be continuously removed from the reactor core and directed to the facilities for direct conversion of their energy, e.g., into electricity. Such separation of the processes allows very great energies, considerably exceeding 1000 megawatt, to be released in the reactor core, since the energy remaining in the moderator and the reactor structure is provided by neutron and gamma-ray quantum energies that constitute not more than 5 percent of the entire nuclear energy released.

The efficiency of the fissile material usage will be rather high since at any given time the reactor core constantly contains not more than several tens of grams, i.e. the amount required for the nuclear chain reaction to proceed.

Additionally, owing to absence of uranium-238 in the reactor core, substantially no transuranic radioactive elements will form in the course of the nuclear chain reaction.

A practical implementation of the present method of neutrons/fissile material interaction will depend on a feasibility of moving the fissile material at the velocity of $10^3$-$10^5$ m/c. To this end, the fissile material should be converted into a gas plasma mixture. To date, the velocity of partially ionized gas movement for various types of material in plasma centrifuges, plasmatron guns and plasma accelerators has the upper limit equal to "$V_{crit}$":

$$V_{crit} = 5 \times 10^3 \ ... \ 5 \times 10^4 \ \text{m/c} \qquad [6]$$

This velocity is related to the magnitude of ionization energy of the partially ionized plasma being moved, and the higher velocity can be achieved only upon complete ionization of the plasma. The velocities can be further increased using the plasma accelerators described in references [5] to [9].

Table 2 lists characteristics of some plasmatron facilities and fields of their application, in which gas/plasma mixtures have been accelerated up to the velocities that may be of interest to attain the object of the invention.

Table 2

| Characteristics of plasmatron installations | | | | | |
|---|---|---|---|---|---|
| Installation or investigation field | Plasma material | Plasma velocity, m/c | Plasma density, nuclei/cm$^3$ | Comment | Reference |
| "Homopolar" and "Ixion" plasma chambers | helium/uranium mixture | $2.2 \times 10^3$-$5 \times 10^4$ | $10^{15}$-$10^{16}$ | | [6] |
| "F1" | argon/helium mixture | $10^4$-$10^5$ | $5 \times 10^{13}$--$5 \times 10^{15}$ | highly ionized plasma | [6] |
| "Supper" | argon/helium mixture | $10^4$ | $5 \times 10^{15}$--$5 \times 10^{17}$ | partially ionized plasma | [6] |
| Aerodynamic tests | hydrogen and helium | $5 \times 10^4$ | | tests of thermally heated structures when entering Jupiter atmosphere | [7] |
| Plasmatroms | nitrogen, argon, helium, hydrogen | $10^5$  $10^4$ | $10^{16}$-$10^{18}$  $10^{18}$-$10^{19}$ | continuous conditions,  pulse conditions | [7] |
| MK-200 pulse accelerator | hydrogen,  nitrogen,  neon | $5 \times 10^5$  $4 \times 10^5$  $4.5 \times 10^5$ | $10^{15}$-$10^{16}$  $10^{14}$-$10^{16}$  $7 \times 10^{14}$ | | [5-9] |

References Cited:

1. Weinberg A., Wigner U., Physical Theory of Nuclear Reactors, II., M., 1961.

2. Kukhlin Kh. Handbook of Physics, translated from German, M., Mir, 1985.

3. Dubovskii B.G., Kamaev A.B., Kuznetzov F.M. et al., Critical Characteristics of Systems With Fissile Materials and Nuclear Safety, Reference Book, Atomizdat, M., 1966.

4. Bulletin of the Nuclear information Center, Issue 3, Suppl.4, Atomizdat, 1967.

5. Donald G. Hudge and Robert E. Shwartz, Atlas of Neutron Cross Sections, Second Edition, amended and supplemented. Brookhaven National laboratory, Upton New York, 1958.

6. Korobtsev S.V., Rusanov V.D., Plasma Centrifuge - New Plasma Chemical Reactor, M., TsNII of Information under the USSR State Committee for Nuclear Power Utilization, 1988.

7. Glebov I.A., Rutberg F.G. High Power Plasma Generators, M., Energoizdat, 1985.

8. Blinov I.P. et al., Vacuum High-Current Plasma Installations and Their Use in Microelectronics Process Equipment, Review, Series: Microelectronics, M., TsNII of Electronics, Issues 7 and 8, 1974.

9. Abramov I.S., Plasma Accelerators and Ion-Plasma Jet Engines, Lectures of Leningrad Electrotechnical Institute, Leningrad, 1978.

10. Leskov LV., Basic Physics of Plasma Accelerators, Part 1., MBCCO, MVTU, 1968.

12. Mikhailovskii F.B. Hydrodynamic Theory of Plasma Rotation in Tokamac, M., IAE named after Kurchatov, 1982.

13. "Physics of Plasma " Journal, vol.8, p.p.1000,1089.

## Claims

1. A method for producing a nuclear fission chain reaction, including affecting a fissile material by a reactor control system to initiate a nuclear fission chain reaction, said method characterized by the steps of: introducing, for the reaction initiation time, a fast neutron source into the reactor core comprising a moderator, a vacuum magnetic trap for retaining a fissile material plasma, and neutron-absorbing screens; slowing down the neutrons of said source to thermal energies and directing the neutrons to the magnetic trap; convening the fissile material into plasma, accelerating and introducing the plasma into the magnetic trap at the velocity determined according to the following formula:

$$V_{fn} = C \sqrt{((E_{nr}/(E_{tn}))^2 - (E_{tn}/(E_r + E_{nr}))^2}$$

wherein

C is the velocity of light, m/c;
$E_{nr}$ is a rest energy of a neutron, eV;
$E_{tn}$ is an energy of thermal neutrons, eV;
$E_r$ is an energy of resonant neutrons, eV,

so that to agree the energy of mutual approach of the thermal neutrons and the fissile material moving nuclei with a selected energy of the fissile material resonance fission; directing the fast neutrons emitted at fission to the moderator, whereupon they are returned to the magnetic trap as thermal neutrons so that to provide a self-sustaining nuclear fission chain reaction at the selected resonance, and, to maintain the critical mass constant, continuously feeding the fissile material into and withdrawing the reaction products from the core, the amount of the thermal neutrons returned to the magnetic trap being controlled by the neutron-absorbing screens.

## INTERNATIONAL SEARCH REPORT

| | International application No. |
|---|---|
| | PCT/EA 98/00005 |

**A. CLASSIFICATION OF SUBJECT MATTER**

IPC6    G21C 7/34, G21C 7/30, G21G 1/02

According to International Patent Classification (IPC) or to both national classification and IPC

**B. FIELDS SEARCHED**

Minimum documentation searched (classification system followed by classification symbols)

IPC6    G21C 7/00, 7/02, 7/06, 7/08, 7/30, 7/34, G21G 1/00, 1/02, G21B 1/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2056649 C1 (STOLBOV SERGEI NIKOLAEVICH et al) 20 March 1996 (20.03.96) | 1 |
| A | US 5544204 A (FORSCHUNGSZENTRUM JULICH GmbH) 06 August 1996 (06.08.96) | 1 |
| A | FR 2400751 A1 (WESTINGHOUSE ELECTRIC CORPORATION) 16 March 1979 (16.03.79) | 1 |
| A | GB 1071 442 A (EUROPEAN ATOMIC ENERGY COMMUNITY) 07 June 1967 (07.06.67) | 1 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 May 1999 (06.05.99) | 12 May 1999 (12.05.99) |

| Name and mailing address of the ISA/ | Authorized officer |
|---|---|
| RU | |
| Facsimile No. | Telephone No. |

Form PCT/ISA/210 (second sheet) (July 1992)

7